# FASCICULE DE BREVET EUROPEEN

(11) **EP 2 079 770 B1**
(45) Date de publication et mention de la délivrance du brevet: **19.03.2014**
(21) Numéro de dépôt: 07858550.2
(22) Date de dépôt: 11.10.2007
(51) Int. Cl.: C09J 161/06

(54) **RESINE PHENOLIQUE, PROCEDE DE PREPARATION, COMPOSITION D'ENCOLLAGE POUR FIBRES MINERALES ET PRODUITS RESULTANTS**
PHENOLHARZ, HERSTELLUNGSVERFAHREN, SCHLICHTUNGSZUSAMMENSETZUNG FÜR MINERALFASERN UND AUF DIESE WEISE GEWONNENE PRODUKTE
PHENOLIC RESIN, PREPARATION METHOD, SIZING COMPOSITION FOR MINERAL FIBRES AND RESULTING PRODUCTS

(30) Priorité: 11.10.2006 FR 0654199
(43) Date de publication de la demande: 22.07.2009
(73) Titulaire: SAINT-GOBAIN ISOVER, 92400 Courbevoie (FR)
(72) Inventeur: GIGNOUX, Vincent, F-60300 Senlis (FR); TETART, Serge, F-60740 Saint-maximin (FR); PONS Y MOLL, Olivier, F-60600 Agnetz (FR)
(74) Mandataire: Jamet, Vincent
(86) Numéro de dépôt international: PCT/FR2007/052120
(87) Numéro de publication internationale: WO 2008/043960

(56) Documents cités:
- EP-A2- 0 480 778
- FR-A- 2 842 815

## Description

L'invention se rapporte à une résine phénolique destinée à entrer dans la constitution d'une composition d'encollage pour fibres minérales. Cette résine est obtenue par condensation de phénol, de formaldéhyde et d'amine en présence d'un catalyseur basique, et elle se caractérise par un taux réduit en formaldéhyde libre

L'invention concerne un procédé de préparation de cette résine, la composition d'encollage des fibres minérales contenant ladite résine et les produits isolants qui en résultent.

Les produits d'isolation à base de fibres minérales peuvent être formés à partir de fibres obtenues par différents procédés, par exemple selon la technique connue du fibrage centrifuge interne ou externe. La centrifugation consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

Pour assurer l'assemblage des fibres entre elles et permettre à la nappe d'avoir de la cohésion, on projette sur les fibres, à la sortie du dispositif centrifuge, une composition d'encollage contenant une résine thermodurcissable. La nappe de fibres revêtues de l'encollage est soumise à un traitement thermique (à une température supérieure à 100°C) afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage se compose de la résine qui se présente en général sous la forme d'une solution aqueuse et d'additifs tels que urée, silanes, huiles minérales, l'ammoniaque et sulfate d'ammonium, et de l'eau. La composition d'encollage est le plus souvent pulvérisée sur les fibres.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement. L'aptitude à la pulvérisation est directement liée à la capacité que possède la résine à pouvoir être diluée dans une grande quantité d'eau et à rester stable dans le temps.

On caractérise l'aptitude à la dilution par la « diluabilité » que l'on définit comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C.

La résine doit encore être stable pendant un laps de temps donné avant d'être utilisée pour former la composition d'encollage, laquelle composition est généralement préparée au moment de l'emploi en mélangeant la résine et les additifs mentionnés précédemment. Notamment, la résine doit être stable pendant au moins 8 jours à une température de l'ordre de 12 à 18°C.

La résine apte à être utilisée dans une composition d'encollage pulvérisable doit présenter une diluabilité supérieure ou égale à 1000 %, à 20°C, pendant au moins 8 jours, de préférence supérieure ou égale à 2000 % (diluabilité infinie).

Sur un plan réglementaire, il est nécessaire que la résine soit considérée comme non polluante, c'est-à-dire qu'elle contienne -et qu'elle génère lors de l'encollage ou ultérieurement- le moins possible de composés considérés comme pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont très solubles dans l'eau, possèdent une bonne affinité pour les fibres minérales, notamment en verre, et sont relativement peu coûteuses.

Ces résines sont obtenues par condensation de phénol et de formaldéhyde, en présence d'un catalyseur basique, dans un rapport molaire formaldéhyde/phénol généralement supérieur à 1 de manière à favoriser la réaction entre le phénol et le formaldéhyde et à diminuer le taux de phénol résiduel dans la résine. La teneur résiduelle en formaldéhyde et en phénol dans la résine demeure élevée.

Pour réduire la quantité de formaldéhyde résiduel, il est connu d'ajouter dans la résine une quantité suffisante d'urée qui réagit avec le formaldéhyde libre en formant des condensats urée-formaldéhyde (voir EP 0 148 050 A1). La résine obtenue renferme des condensats de phénol-formaldéhyde et d'urée-formaldéhyde, présente un taux de formaldéhyde libre et de phénol libre, exprimé en poids total de liquide, inférieur ou égal à 3 % et 0,5 %, respectivement, et a une diluabilité à l'eau au moins égale à 1000 %.

Si la quantité de phénol résiduel est acceptable, en revanche la quantité de formaldéhyde résiduel est trop élevée pour satisfaire les contraintes réglementaires actuelles.

Par ailleurs, il a été constaté que la résine n'est pas stable dans les conditions qui sont appliquées lors du traitement des fibres encollées en vue d'obtenir la réticulation de la résine pour former les produits isolants finals. A la température du traitement, en général supérieure à 100°C dans l'étuve, les condensats urée-formaldéhyde sont dégradés et libèrent du formaldéhyde qui augmente les émissions de gaz indésirables dans l'atmosphère. Du formaldéhyde peut aussi être libéré à partir du produit final, lors de son utilisation en tant qu'isolant thermique et/ou acoustique.

Dans EP 0 480 778 A1, il a été proposé de substituer une partie de l'urée par une amine qui réagit avec le phénol et le formaldéhyde libres selon la réaction de Mannich pour former un produit de condensation ayant une stabilité thermique améliorée. Le taux de phénol et de formaldéhyde libres de cette résine est inférieur ou égal à 0,20 % et inférieur ou égal à 3 %, respectivement.

La présente invention a pour objet une résine phénolique qui présente des caractéristiques suffisantes pour pouvoir être utilisée dans une composition d'encollage pulvérisable et qui a une capacité faible à produire des émissions indésirables, notamment qui présente un faible taux de formaldéhyde libre et génère peu de formaldéhyde au cours de son utilisation.

Un autre objet de l'invention est un procédé de fabrication de la résine qui ne fait pas intervenir d'urée pour diminuer le taux de formaldéhyde libre.

L'invention a aussi pour objet une composition d'encollage comprenant ladite résine, son utilisation pour encoller des fibres minérales en vue de former des produits d'isolation thermique et/ou acoustique et les produits ainsi obtenus.

La résine liquide conforme à l'invention, destinée à être utilisée dans une composition d'encollage pour fibres minérales, contient essentiellement des condensats de phénol-formaldéhyde. (P-F) et de phénol-formaldéhyde-amine (P-F-A). Celle-ci présente un taux de formaldéhyde libre inférieur ou égal à 0,1 % en poids total de liquide.

Le taux de phénol libre de la résine est inférieur ou égal à 0,5 % en poids total de liquide, de préférence inférieur ou égal à 0,4 %.

La résine présente une diluabilité, mesurée à 20°C, au moins égale à 1000 %.

La résine est en outre stable thermiquement car elle est exempte de condensats urée-formaldéhyde (U-F) connus pour leur aptitude à se dégrader sous l'effet de la température. Les condensats P-F-A sont quant à eux stables dans les conditions précitées, notamment ils génèrent peu de formaldéhyde, en particulier lors du vieillissement du produit isolant final.

L'amine est choisie parmi les amines qui peuvent réagir avec un aldéhyde, par exemple le formaldéhyde, et un composé organique comprenant des atomes d'hydrogène actifs, par exemple le phénol, pour former une base de Mannich. A titre d'exemples de telles amines, on peut citer les alcanolamines, notamment la monoéthanolamine, la diéthanolamine et les amines cycliques, notamment la pipéridine, la pipérazine et la morpholine. On préfère la monoéthanolamine et la diéthanolamine.

Selon l'invention, on fait suivre la réaction de condensation du phénol et du formaldéhyde par une réaction qui consiste à condenser le phénol libre et le formaldéhyde libre avec une amine.

Pour obtenir la résine telle que définie ci-dessus, l'invention propose un procédé qui consiste à faire réagir du phénol et du formaldéhyde en présence d'un catalyseur basique, dans un rapport molaire formaldéhyde/phénol supérieur à 1, à refroidir le mélange réactionnel et à introduire dans ledit mélange réactionnel, au cours du refroidissement, une amine qui réagit avec le formaldéhyde et le phénol libres selon la réaction de Mannich. L'invention se caractérise en ce que, dès l'introduction de l'amine, on interrompt le refroidissement et on maintient le mélange réactionnel à la température d'introduction pendant une durée qui varie de 10 à 120 minutes, et qu'après le refroidissement, on ajoute un acide en quantité suffisante pour que le pH de la résine soit inférieur à 7.

De préférence, on fait réagir le phénol et le formaldéhyde dans un rapport molaire formaldéhyde/phénol compris entre 2 et 4, et avantageusement inférieur ou égal à 3, jusqu'à un taux de conversion du phénol supérieur ou égal à 93 %, et on commence à refroidir le mélange réactionnel. Le refroidissement intervient à un stade de la condensation qui correspond à une résine pouvant encore être diluée par de l'eau (diluabilité supérieure à 1000 %).

Par « taux de conversion du phénol », on entend le pourcentage de phénol ayant participé à la réaction de condensation avec le formaldéhyde par rapport au phénol de départ.

Conformément à l'invention, l'amine est ajoutée au cours du refroidissement, de manière progressive car la réaction avec le phénol et le formaldéhyde est exothermique, et la température au moment de l'ajout de l'amine est maintenue pendant la durée mentionnée plus haut, tout en veillant à ce que la diluabilité de la résine reste au moins égale à 1000 %.

L'introduction de l'amine est effectuée dès le début du refroidissement, à une température qui peut varier de 50 à 65°C, de préférence de l'ordre de 60°C.

La phase de maintien de la température permet de faire réagir l'amine avec la quasi-totalité du formaldéhyde présent dans le milieu réactionnel et par conséquent d'abaisser le taux de formaldéhyde libre dans la résine finale jusqu'à une valeur inférieure ou égale à 0,1 %.

Le maintien à la température mentionnée précédemment permet en outre de réduire le taux de phénol libre dans la résine, en particulier lorsque celle-ci est obtenue avec un rapport molaire formaldéhyde/phénol inférieur à 3. Le taux de phénol libre dans la résine est ainsi inférieur ou égal à 0,5 %.

La préparation de la résine a lieu selon un cycle de température qui comprend trois phases : une phase de chauffage, un premier palier de température et une phase de refroidissement.

Dans la première phase, on fait réagir du formaldéhyde et du phénol en présence d'un catalyseur basique en chauffant progressivement à une température comprise entre 60 et 75°C, de préférence à environ 70°C. Le rapport molaire formaldéhyde/phénol est supérieur à 1, de préférence varie de 2 à 4, et avantageusement inférieur ou égal à 3.

Le catalyseur peut être choisi parmi les catalyseurs connus de l'homme du métier, par exemple la triéthylamine, la chaux CaO et les hydroxydes de métaux alcalins ou alcalino-terreux, par exemple les hydroxydes de sodium, de potassium, de calcium ou de baryum. L'hydroxyde de sodium est préféré.

La quantité de catalyseur varie de 2 à 15 % en poids par rapport au poids de phénol de départ, de préférence de 5 à 9 %, et avantageusement de 6 à8%.

Dans la deuxième phase, la température du mélange réactionnel qui est atteinte après le chauffage du mélange réactionnel (fin de première phase) est maintenue jusqu'à ce que le taux de conversion du phénol soit au moins égal à 93 %.

La troisième phase est une phase de refroidissement au cours de laquelle on introduit l'amine dans le mélange réactionnel afin de commencer la réaction avec le formaldéhyde et le phénol résiduels et former ainsi les condensats P-F-A.

L'addition de l'amine a lieu progressivement à cause du caractère exothermique de la réaction comme indiqué précédemment, et peut par exemple être effectuée à raison de 1 à 5 % en poids par minute de la quantité totale d'amine, de préférence 2 à 4 %.

La quantité d'amine, en particulier d'alcanolamine, est ajoutée à raison de 0,2 à 0,7 mole d'amine par mole de phénol de départ, de préférence 0,25 à 0,5 mole.

La durée de l'ajout de l'amine peut varier de 10 à 120 minutes, de préférence de 20 à 100 minutes, et avantageusement de 25 à 50 minutes.

De préférence, l'ajout de l'amine s'effectue à une température comprise entre 50 et 65°C, et avantageusement de l'ordre de 60°C.

Après l'ajout de l'amine, on effectue un palier de température en maintenant la température de fin d'introduction pendant 10 à 120 minutes, de préférence au moins 15 minutes, de manière à poursuivre la réaction de condensation du formaldéhyde et du phénol avec l'amine jusqu'à un stade plus avancé et réduire encore la quantité de formaldéhyde et de phénol libres, la diluabilité de la résine, mesurée à 20°C, devant être maintenue au moins égale à 1000 %.

Après la formation des condensats P-F-A, on refroidit le mélange réactionnel pour que sa température atteigne 20 à 25°C environ et on le neutralise afin d'arrêter les réactions de condensation.

Selon l'invention, la neutralisation du mélange réactionnel est effectuée par l'ajout d'un acide jusqu'à l'obtention d'un pH inférieur à 7, de préférence inférieur à 6, avantageusement supérieur à 4 et mieux encore de l'ordre de 5. L'acide est choisi parmi les acides sulfurique, sulfamique, phosphorique et borique. L'acide sulfurique et l'acide sulfamique sont préférés.

L'invention concerne aussi une composition d'encollage applicable sur des fibres minérales, notamment des fibres de verre ou de roches, ainsi que les produits isolants obtenus à partir de ces fibres encollées.

La composition d'encollage comprend la résine phénolique selon la présente invention et des additifs d'encollage.

Etant donné que, comme indiqué précédemment, la résine conforme à l'invention présente un taux de formaldéhyde libre très faible, inférieur ou égal à 0,1 %, il n'est pas nécessaire d'ajouter de l'urée dans la composition d'encollage, sauf à vouloir contrôler le temps de gel de l'encollage afin d'éviter d'éventuels problèmes de prégélification.

D'une manière générale, la composition d'encollage conforme à l'invention comprend les additifs suivants, pour 100 parts de matières solides de résine et d'urée, le cas échéant :
- 0 à 5 parts de sulfate d'ammonium, généralement moins de 3 parts,
- 0 à 2 parts de silane, en particulier un aminosilane,
- 0 à 20 parts d'huile, généralement 6 à 15 parts,
- 0 à 20 parts d'ammoniaque (solution à 20 % en poids), généralement moins de 12 parts.

Le rôle des additifs est connu et brièvement rappelé : le sulfate d'ammonium sert de catalyseur de polycondensation (dans l'étuve à chaud) après la pulvérisation de la composition d'encollage sur les fibres ; le silane est un agent de couplage entre les fibres et la résine, et joue également le rôle d'agent anti-vieillissement ; les huiles sont des agents anti-poussières et hydrophobes ; l'ammoniaque joue, à froid, le rôle de retardateur de polycondensation ; l'urée, comme déjà mentionné, agit sur la prégélification de l'encollage.

Les exemples qui suivent permettent d'illustrer l'invention sans toutefois la limiter.

Dans les exemples, on utilise les méthodes d'analyse suivantes :
- la quantité de phénol libre est mesurée par chromatographie en phase gazeuse utilisant une colonne remplie (phase stationnaire : Carbowax 20 M) et un détecteur à ionisation de flamme (FID),
- la quantité de formaldéhyde libre est mesurée par chromatographie haute performance (HPLC) et réaction post-colonne dans les conditions de la norme ASTM D 5910-96 modifiées en ce que la phase mobile est de l'eau tamponnée à pH 6,8, que la température du four est égale à 90°C et que la détection est effectuée à 420 nm.

### EXEMPLE 1

Dans un réacteur de 2 litres surmonté d'un condenseur et équipé d'un système d'agitation, on introduit 378 g de phénol (4 moles) et 809 g de formaldéhyde (10 moles) en solution aqueuse à 37% (rapport molaire formaldéhyde/phénol égal à 2,5) et on chauffe le mélange à 45°C sous agitation.

On ajoute régulièrement en 30 minutes 52,7 g de soude en solution aqueuse à 50 % (soit 7 % en poids par rapport au phénol), puis on élève la température progressivement à 70°C en 30 minutes et on la maintient pendant 80 minutes de manière à atteindre un taux de conversion du phénol égal à 93 %.

Ensuite, on diminue la température à 60 °C en 30 minutes et simultanément on introduit dans le mélange réactionnel, de manière régulière, 75,3 g de monoéthanolamine (1,2 mole). On maintient la température à 60°C pendant 15 minutes, on refroidit le mélange jusqu'à 25°C environ en 30 minutes et on ajoute de l'acide sulfamique en solution à 15 %, en 60 minutes, jusqu'à ce que le pH soit égal à 5,0.

La résine a l'aspect d'une composition aqueuse limpide ayant une diluabilité à l'eau, à 20°C, supérieure à 1000 % après 8 jours de stockage à 14°C et après 21 jours à 8°C.

La résine présente un taux de formaldéhyde libre égal à 0,05 % et un taux de phénol libre égal à 0,2 %, les taux étant exprimés en poids total de liquide.

### EXEMPLE 2 (COMPARATIF)

Préparation d'une résine phénolique selon l'exemple 4 de EP 0 480 778 A2 faisant intervenir une amine.

Dans le réacteur de l'exemple 1, on introduit 564,66 g de phénol (6 moles) et 1217,43 g de formaldéhyde (15 moles) en solution aqueuse à 37% (rapport molaire formaldéhyde/phénol égal à 2,3) et on chauffe le mélange à 45°C sous agitation.

On ajoute régulièrement en 30 minutes 56,47 g de soude en solution aqueuse à 50 % (soit 5 % en poids par rapport au phénol), puis on élève la température progressivement à 70°C en 30 minutes et on la maintient pendant 90 minutes de manière à atteindre un taux de conversion du phénol égal à 93 %. Ensuite, on diminue la température à 60 °C en 30 minutes et simultanément on introduit dans le mélange réactionnel, de manière régulière, 124,22 g de diéthanolamine (1,2 mole). On maintient la température à 60°C pendant 15 minutes, on refroidit le mélange jusqu'à 25°C environ en 30 minutes et on ajoute de l'acide sulfurique en solution à 25 %, en 60 minutes, jusqu'à ce que le pH soit égal à 8,0-8,1.

La résine présente un taux de formaldéhyde libre égal à 1,0 % et un taux de phénol libre égal à 1,3 %, les taux étant exprimés en poids total de liquide.

### EXEMPLE 3 (COMPARATIF)

Préparation d'une résine phénolique traditionnelle exempte d'urée.

Dans le réacteur de l'exemple 1, on introduit 378 g de phénol (4 moles) et 857,7 g de formaldéhyde (12,8 moles) en solution aqueuse à 45 % (rapport molaire formaldéhyde/phénol égal à 3,2) et on chauffe le mélange à 45°C sous agitation.

On ajoute régulièrement en 30 minutes 45,36 g de soude en solution aqueuse à 50 % (soit 6 % en poids par rapport au phénol), puis on élève la température progressivement à 70°C en 30 minutes et on la maintient pendant 90 minutes de manière à atteindre un taux de conversion du phénol égal à 98 %.

On refroidit le mélange jusqu'à 25°C environ en 45 minutes et on ajoute de l'acide sulfamique solide, en 60 minutes, jusqu'à ce que le pH soit égal à 7,3.

La résine présente une diluabilité à l'eau, à 20°C, supérieure à 1000% après 21 jours de stockage à 14°C.

La résine présente un taux de formaldéhyde libre égal à 5,3 % et un taux de phénol libre égal à 0,41 %, les taux étant exprimés en poids total de liquide.

## Revendications

1. Résine liquide, destinée à entrer dans la constitution d'une composition d'encollage pour fibres minérales, constituée essentiellement de condensats de phénol-formaldéhyde et de phénol-formaldéhyde-amine et présentant une diluabilité à l'eau, à 20°C, au moins égale à 1000 %, ladite résine liquide étant exempte de condensats urée-formaldéhyde, **caractérisée en ce qu'**elle présente un taux de formaldéhyde libre inférieur ou égal à 0,1 % en poids total de liquide et un pH inférieur à 7.

2. Résine selon la revendication 1, **caractérisée en ce qu'**elle présente un taux de phénol libre inférieur ou égal à 0,5 % en poids total de liquide.

3. Résine selon la revendication 2, **caractérisée en ce que** le taux de phénol libre est inférieur ou égal à 0,4 %.

4. Résine selon l'une des revendications 1 à 3 **caractérisée en ce que** l'amine est une alcanolamine ou une amine cyclique.

5. Résine selon la revendication 4, **caractérisée en ce que** l'amine est la monoéthanolamine ou la diéthanolamine.

6. Résine selon l'une des revendications 1 à 5, **caractérisée en ce qu'**elle présente un taux de formaldéhyde libre inférieur ou égal à 0,1 %, un taux de phénol inférieur à 0,4 % et une diluabilité à l'eau supérieure ou égale à 2000 %.

7. Procédé de préparation d'une résine constituée essentiellement de condensats de phénol-formaldéhyde et de phénol-formaldéhyde-amine, ne renfermant pas de condensats urée-formaldéhyde, présentant une diluabilité à l'eau, à 20°C, au moins égale à 1000 %, et un taux de formaldéhyde libre inférieur ou égal à 0,1 % en poids total de liquide, consistant à faire réagir du phénol et du formaldéhyde dans un rapport molaire formaldéhyde/phénol supérieur à 1, en présence d'un catalyseur basique, à refroidir le mélange réactionnel et à introduire dans ledit mélange réactionnel, au cours du refroidissement, une amine qui réagit avec le formaldéhyde et le phénol libres selon la réaction de Mannich, **caractérisé en ce que**, dès l'introduction de l'amine, on interrompt le refroidissement et on maintient le mélange réactionnel à la température d'introduction pendant une durée variant de 10 à 120 minutes, et **en ce qu'**après le refroidissement, on ajoute un acide en quantité suffisante pour que le pH de la résine soit inférieur à 7.

8. Procédé selon la revendication 7, **caractérisé en ce que** la durée d'introduction de l'amine varie de 20 à 100 minutes.

9. Procédé selon la revendication 7 ou 8, **caractérisé en ce que** l'on fait réagir le formaldéhyde et le phénol dans un rapport molaire formaldéhyde/phénol compris entre 2 et 4, de préférence inférieur à 3, et jusqu'à un taux de conversion du phénol supérieur ou égal à 93 %.

10. Procédé selon l'une des revendications 7 à 9, **caractérisé en ce que** l'introduction de l'amine est effectuée dès le début du refroidissement, à une température comprise entre 50 et 65°C, de préférence de l'ordre de 60°C.

11. Procédé selon l'une des revendications 7 à 10, **caractérisé en ce que** l'amine est une alcanolamine ou une amine cyclique.

12. Procédé selon la revendication 11, **caractérisé en ce que** l'amine est la monoéthanolamine ou la diéthanolamine.

13. Procédé selon l'une des revendications 7 à 12, **caractérisé en ce que** l'amine est ajoutée à raison de 0,2 à 0,7 mole par mole de phénol de départ.

14. Procédé selon l'une des revendications 7 à 13, **caractérisé en ce que** le pH de la résine est inférieur à 6.

15. Procédé selon l'une des revendications 7 à 14, **caractérisé en ce que** l'acide est choisi parmi les acides sulfurique, sulfamique, phosphorique et borique.

16. Procédé selon la revendication 8, **caractérisé en ce que** la durée d'introduction de l'amine varie de 25 à 50 minutes.

17. Procédé selon la revendication 13, **caractérisé en ce que** l'amine est ajoutée à raison de 0,25 à 0,50 mole par mole de phénol de départ.

18. Procédé selon la revendication 14, **caractérisé en ce que** le pH de la résine est supérieur à 4.

19. Procédé selon la revendication 18, **caractérisé en ce que** le pH de la résine est de l'ordre de 5.

20. Procédé selon la revendication 15, **caractérisé en ce que** l'acide est choisi parmi l'acide sulfurique et l'acide sulfamique.

21. Composition d'encollage pour fibres minérales, comprenant une résine phénolique selon l'une des revendications 1 à 6, et éventuellement de l'urée et des additifs d'encollage.

22. Produit d'isolation, notamment thermique et/ou acoustique, comprenant des fibres minérales encollées à l'aide de la composition d'encollage selon la revendication 21.

23. Utilisation d'une composition d'encollage selon la revendication 21 pour la fabrication de produits isolant à base de fibres minérales.

24. Utilisation selon la revendication 23, **caractérisée en ce que** les fibres minérales sont des fibres de verre ou de roche.

## Patentansprüche

1. Flüssiges Harz, dazu bestimmt im Aufbau einer Bindemittelzusammensetzung für Mineralfasern eingesetzt zu werden, gebildet im Wesentlichen aus Phenol-Formaldehyd- und Phenol-Formaldehyd-Amin-Kondensaten, mit einer Wasserverdünnbarkeit bei 20°C von mindestens 1000%, wobei das flüssige Harz frei von Harnstoff-Formaldehyd-Kondensaten ist, **dadurch gekennzeichnet, dass** der Gehalt an freiem Formaldehyd kleiner oder gleich 0, 1 % bezogen auf das Gesamtgewicht der Flüssigkeit und dass der pH-Wert kleiner als 7 ist.

2. Harz nach Anspruch 1, **dadurch gekennzeichnet, dass** der Gehalt an freiem Phenol kleiner oder gleich 0,5% bezogen auf das Gesamtgewicht der Flüssigkeit ist.

3. Harz nach Anspruch 2, **dadurch gekennzeichnet, dass** der Gehalt an freiem Phenol kleiner oder gleich 0,4% ist.

4. Harz nach einem der Ansprüche 1 bis 3, **dadurch gekennzeichnet, dass** das Amin ein Alkanolamin oder ein zyklisches Amin ist.

5. Harz nach Anspruch 4, **dadurch gekennzeichnet, dass** das Amin Monoethanolamin oder Diethanolamin ist.

6. Harz nach einem der Ansprüche 1 bis 5, **dadurch gekennzeichnet, dass** der Gehalt an freiem Formaldehyd kleiner oder gleich 0, 1 %, der Gehalt an Phenol kleiner als 0,4% und die Wasserverdünnbarkeit größer oder gleich 2000% ist.

7. Verfahren zur Herstellung eines Harzes, welches im Wesentlichen zusammengesetzt ist aus Phenol-Formaldehyd- und Phenol-Formaldehyd-Amin-Kondensaten, keine Harnstoff-Formaldehyd-Kondensate enthält, eine Wasserverdünnbarkeit bei 20°C von mindestens 1000% und einen Gehalt an freiem Formaldehyd von kleiner oder gleich 0, 1 % bezogen auf das Gesamtgewicht der Flüssigkeit aufweist, darin bestehend, Phenol und Formaldehyd in einem Molverhältnis Formaldehyd/Phenol größer 1 in Anwesenheit eines basisches Katalysators reagieren zu lassen, das Reaktionsgemisch zu kühlen und während des Abkühlens dem Reaktionsgemisch ein Amin zuzugeben, welches mit dem freien Formaldehyd und dem freien Phenol gemäß der Mannich-Reaktion reagiert, **dadurch gekennzeichnet, dass** mit Beginn der Zugabe des Amins die Kühlung unterbrochen und das Reaktionsgemisch auf der Temperatur zu Beginn der Zugabe während einer Zeitdauer von 10 bis 120 Minuten gehalten wird, und dass nach dem Abkühlen eine Säure in einer ausreichenden Menge zugegeben wird, damit der pH-Wert des Harzes kleiner als 7 ist.

8. Verfahren nach Anspruch 7, **dadurch gekennzeichnet, dass** die Zeitdauer der Zugabe des Amins zwischen 20 und 100 Minuten beträgt.

9. Verfahren nach Anspruch 7 oder 8, **dadurch gekennzeichnet, dass** man das Formaldehyd und das Phenol miteinander in einem Molverhältnis Formaldehyd/Phenol von 2 bis 4, bevorzugt kleiner als 3 reagieren lässt, bis zu einem Umsetzungsgrad des Phenols größer oder gleich 93%.

10. Verfahren nach einem der Ansprüche 7 bis 9, **dadurch gekennzeichnet, dass** die Zugabe des Amins mit Beginn des Kühlens erfolgt bei einer Temperatur zwischen 50 und 65°C, bevorzugt bei etwa 60°C.

11. Verfahren nach einem der Ansprüche 7 bis 10, **dadurch gekennzeichnet, dass** das Amin ein Alkanolamin oder ein zyklisches Amin ist.

12. Verfahren nach Anspruch 11, **dadurch gekennzeichnet, dass** das Amin Monoethanolamin oder Diethanolamin ist.

13. Verfahren nach einem der Ansprüche 7 bis 12, **dadurch gekennzeichnet, dass** das Amin in einem Verhältnis von 0,2 bis 0,7 Mol pro Mol Phenol bezogen auf die Startmenge zugegeben wird.

14. Verfahren nach einem der Ansprüche 7 bis 13, **dadurch gekennzeichnet, dass** der pH-Wert des Harzes kleiner als 6 ist.

15. Verfahren nach einem der Ansprüche 7 bis 14, **dadurch gekennzeichnet, dass** die Säure ausgewählt ist aus Schwefelsäure, Sulfaminsäure, Phosphorsäure und Borsäure.

16. Verfahren nach Anspruch 8, **dadurch gekennzeichnet, dass** die Zeitdauer der Zugabe des Amins zwischen 25 und 50 Minuten beträgt.

17. Verfahren nach Anspruch 13, **dadurch gekennzeichnet, dass** das Amin in einem Verhältnis von 0,25 bis 0,5 Mol pro Mol Phenol bezogen auf die Startmenge zugegeben wird.

18. Verfahren nach Anspruch 14, **dadurch gekennzeichnet, dass** der pH-Wert des Harzes größer als 4 ist.

19. Verfahren nach Anspruch 18, **dadurch gekennzeichnet, dass** der pH-Wert des Harzes etwa 5 beträgt.

20. Verfahren nach Anspruch 15, **dadurch gekennzeichnet, dass** die Säure ausgewählt ist aus Schwefelsäure und Sulfaminsäure.

21. Bindemittelzusammensetzung für Mineralfasern, enthaltend ein Phenolharz nach einem der Ansprüche 1 bis 6 und ggf. Harnstoff und Bindemitteladditive.

22. Dämmstoff, insbesondere Wärmedämmstoff und/oder Schalldämmstoff, enthaltend mit einer Bindemittelzusammensetzung nach Anspruch 21 gebundene Mineralfasern.

23. Verwendung einer Bindemittelzusammensetzung nach Anspruch 21 für die Herstellung von Dämmstoffen auf Basis von Mineralfasern.

24. Verwendung nach Anspruch 23, **dadurch gekennzeichnet, dass** die Mineralfasern Glasfasern oder Steinfasern sind.

## Claims

1. Liquid resin, intended to be used in the formulation of a sizing composition for mineral fibres, essentially consisting of phenol-formaldehyde and phenol-formaldehyde-amine condensates and having a water dilutability at 20°C of at least 1000%, said liquid resin being free of urea-formaldehyde condensates, **characterized in that** it has a free formaldehyde content of 0.1% or less, this content being expressed with respect to the total weight of liquid, and a pH of less than 7.

2. Resin according to Claim 1, **characterized in that** it has a free phenol content of 0.5% or less with respect to the total weight of liquid.

3. Resin according to Claim 2, **characterized in that** the free phenol content is 0.4% or less.

4. Resin according to one of Claims 1 to 3, **characterized in that** the amine is an alkanolamine or a cyclic amine.

5. Resin according to Claim 4, **characterized in that** the amine is monoethanolamine or diethanolamine.

6. Resin according to one of Claims 1 to 5, **characterized in that** it has a free formaldehyde content of 0.1% or less, a free phenol content of less than 0.4% and a water dilutability of 2000% or higher.

7. Method of preparing a resin essentially consisting of phenol-formaldehyde and phenol-formaldehyde-amine condensates, which does not contain urea-formaldehyde condensates, having a water dilutability at 20°C of at least 1000%, and a free formaldehyde content of 0.1% or less, this content being expressed with respect to the total weight of liquid, consisting in reacting the phenol and the formaldehyde in a formaldehyde/phenol molar ratio of greater than 1, in the presence of a basic catalyst, in cooling the reaction mixture and in introducing into said reaction mixture, during the cooling, an amine that reacts with the free formaldehyde and the free phenol via the Mannich reaction, **characterized in that** as soon as the amine is introduced the cooling is interrupted and the reaction mixture is maintained at the introduction temperature for a time varying from 10 to 120 minutes, and **in that** after the cooling an acid is added in a sufficient amount that the pH of the resin is less than 7.

8. Method according to Claim 7, **characterized in that** the duration of amine introduction varies from 20 to 100 minutes.

9. Method according to Claim 7 or 8, **characterized in that** the formaldehyde reacts with the phenol in a formaldehyde/phenol molar ratio of between 2 and 4, preferably less than 3, and to a degree of phenol conversion of 93% or higher.

10. Method according to one of Claims 7 to 9, **characterized in that** the introduction of the amine is carried out right from the start of the cooling at a temperature between 50 and 65°C, preferably around 60°C.

11. Method according to one of Claims 7 to 10, **characterized in that** the amine is an alkanolamine or a cyclic amine.

12. Method according to Claim 11, **characterized in that** the amine is monoethanolamine or diethanolamine.

13. Method according to one of Claims 7 to 12, **characterized in that** the amine is added in an amount of 0.2 to 0.7 mol per mole of starting phenol.

14. Method according to one of Claims 7 to 13, **characterized in that** the pH of the resin is less than 6.

15. Method according to one of Claims 7 to 14, **characterized in that** the acid is chosen from sulphuric, sulphamic, phosphoric and boric acids.

16. Method according to Claim 8, **characterized in that** the duration of the amine introduction varies from 25 to 50 minutes.

17. Method according to Claim 13, **characterized in that** the amine is added in an amount of 0.25 to 0.50 mol per mole of starting phenol.

18. Method according to Claim 14, **characterized in that** the pH of the resin is higher than 4.

19. Method according to Claim 18, **characterized in that** the pH of the resin is around 5.

20. Method according to one of Claim 15, **characterized in that** the acid is chosen from sulphuric acid and sulphamic acid.

21. Sizing composition for mineral fibres, comprising a phenolic resin according to one of Claims 1 to 6 and optionally urea and sizing additives.

22. Insulation product, especially a thermal and/or acoustic product, comprising mineral fibres sized with the sizing composition according to Claim 21.

23. Use of a sizing composition according to Claim 21, for the manufacture of insulating products based on mineral fibres.

24. Use according to Claim 23, **characterized in that** the mineral fibres are glass fibres or rock fibres.
